# EUROPEAN PATENT APPLICATION

(11) **EP 4 618 563 A1**
(43) Date of publication of application: **17.09.2025**
(21) Application number: 23888024.9
(22) Date of filing: 07.11.2023
(51) Int. Cl.: H04N 21/472

(54) **LIVESTREAM METHOD AND APPARATUS, DEVICE AND STORAGE MEDIUM**

(30) Priority: 10.11.2022 CN 202211404569
(71) Applicant: Beijing Zitiao Network Technology Co., Ltd., Beijing 100190 (CN)
(72) Inventor: WANG, Xiao, Beijing 100028 (CN)
(74) Representative: Grünecker Patent- und Rechtsanwälte PartG mbB
(86) International application number: PCT/CN2023/130317
(87) International publication number: WO 2024/099335

(57) **Abstract**

According to embodiments of the disclosure, a method, apparatus, device, and storage medium for live streaming are provided. The method includes: receiving an access request for a first live streaming room, the first live streaming room corresponding to a first live streaming party; and presenting a first live streaming interface of the first live streaming room, the first live streaming interface being configured to provide a first video content and a second video content, the first video content corresponding to a first source, the second video content corresponding to a second source associated with the first live streaming party, the first live streaming interface further comprising an entry associated with a second live streaming room corresponding to the first source. Therefore, the embodiments of the disclosure support simultaneous presentation of a live streaming video referenced by a live streaming party (for example, the anchor) and an anchor video, and improve the flexibility of the live streaming of the anchor.

## Description

This application claims the benefit of Chinese Patent Application No. 202211404569.5, filed on Nov. 10, 2022, entitled 'METHOD, APPARATUS, DEVICE, AND STORAGE MEDIUM FOR LIVE STREAMING,' the entire content of which is incorporated herein by reference.

### FIELD

Example embodiments of the present disclosure generally relate to the field of computers, and in particular, to a method, apparatus, device, and computer-readable storage medium for live streaming.

### BACKGROUND

With the development of the Internet, Internet-based live streaming has become one of the most important channels for people to obtain information. More and more individual users have joined the party of live streaming, providing various types of live streaming through live streaming platforms. As a result, people expect to enrich the sources of live streaming content and improve the flexibility of live streaming.

### SUMMARY

**In** a first aspect of the present disclosure, a method for live streaming is provided. The method includes: receiving an access request for a first live streaming room, the first live streaming room corresponding to a first live streaming party; and presenting a first live streaming interface of the first live streaming room, the first live streaming interface being configured to provide a first video content and a second video content, the first video content corresponding to a first source, the second video content corresponding to a second source associated with the first live streaming party, the first live streaming interface further including an entry associated with a second live streaming room corresponding to the first source.

**In** a second aspect of the present disclosure, an apparatus for live streaming is provided. The apparatus includes: a receiving module configured to receive an access request for a first live streaming room, the first live streaming room corresponding to a first live streaming party; and a presenting module configured to present a first live streaming interface of the first live streaming room, the first live streaming interface being configured to provide a first video content and a second video content, the first video content corresponding to a first source, the second video content corresponding to a second source associated with the first live streaming party, the first live streaming interface further including an entry associated with a second live streaming room corresponding to the first source.

**In** a third aspect of the present disclosure, an electronic device is provided. The device includes: at least one processing unit; and at least one memory coupled to the at least one processing unit and storing instructions for execution by the at least one processing unit, the instructions, when executed by the at least one processing unit, causing the apparatus to perform the method of the first aspect.

**In** a fourth aspect of the present disclosure, a computer-readable storage medium having a computer program stored thereon is provided, the computer program, when executed by a processor, implementing the method the first aspect.

It should be understood that the content described in the content part of the present disclosure is not intended to limit the key features or important features of the embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments of the present disclosure may be implemented;
FIGS. 2A to 2D illustrate an example live streaming management interface according to some embodiments of the present disclosure;
FIGS. 3A to 3C illustrate an example live streaming interface according to some embodiments of the present disclosure;
FIG. 4 illustrates an example live streaming interface according to some other embodiments of the present disclosure;
FIG. 5 illustrates a schematic diagram of a merged video stream according to some embodiments of the present disclosure;
FIG. 6 shows a flowchart of an example process for live streaming according to some embodiments of the present disclosure;
FIG. 7 illustrates a block diagram of an apparatus for live streaming according to some embodiments of the present disclosure; and
FIG. 8 illustrates a block diagram of a device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms and should not be construed as limited to the embodiments set forth herein. Rather, these embodiments are provided for a more thorough and complete understanding of the present disclosure. It should be understood that the drawings and embodiments of the present disclosure are for exemplary purposes only and are not intended to limit the scope of the present disclosure.

In the description of the embodiments of the present disclosure, the terms 'including', and the like should be understood to include 'including but not limited to'. The term 'based on' should be understood as 'based at least in part on'. The terms 'one embodiment' or 'the embodiment' should be understood as 'at least one embodiment'. The term 'some embodiments' should be understood as 'at least some embodiments'. Other explicit and implicit definitions may also be included below.

Herein, unless explicitly stated, 'in response to A' performs one step and does not imply that this step is performed immediately after 'A' but may include one or more intermediate steps.

It may be understood that the data involved in the technical solution (including but not limited to the data itself, the obtaining or use of the data) should follow the requirements of the corresponding laws and regulations and related regulations.

It may be understood that, before the technical solutions disclosed in the embodiments of the present disclosure are used, the types of personal information related to the present disclosure, the usage scope, the usage scenario and the like should be notified to the user in an appropriate manner according to the relevant laws and regulations, and the creation of the user is obtained.

For example, in response to receiving an active request from a user, prompt information is sent to the user to explicitly prompt the user that the requested operation will need to obtain and use personal information of the user, so that the user may autonomously select whether to provide personal information to software or hardware executing the operation of the technical solution of the present disclosure according to the prompt information.

As an optional but non-limiting implementation, in response to receiving an active request of the user, a manner of sending prompt information to the user may be, for example, a pop-up window, and prompt information may be presented in a text manner in the pop-up window. In addition, the pop-up window may further carry a selection control for the user to select 'agree' or 'disagree' to provide personal information to the electronic device.

It may be understood that the foregoing notification and obtaining a user creation process are merely illustrative, and do not constitute a limitation on implementations of the present disclosure, and other manners of meeting related laws and regulations may also be applied to implementations of the present disclosure.

In a traditional online live streaming, a live streaming party (also referred to as an anchor) may add various types of live streaming materials. For example, taking a game live streaming as an example, a live streaming party may share a screen of a game application as a live streaming material. Alternatively, the live streaming party may further share a content of its current screen or an application in the screen as a live streaming material.

However, such a manner of live streaming is under-flexible. Taking an athletic event live streaming as an example, only an official live streaming room has a live streaming authority of corresponding content due to constraints such as content permissions. This makes other personal live streaming rooms unable to perform live streaming of corresponding content.

The embodiment of the disclosure provides a scheme of live streaming. According to the scheme, an access request for a first live streaming room is received, wherein the first live streaming room corresponds to a first live streaming party. Correspondingly, a first live streaming interface of the first live streaming room may be presented, wherein the first live streaming interface is configured to provide a first video content and a second video content. The first video content corresponds to a first source, and the second video content corresponds to a second source associated with the first live streaming party, wherein the first live streaming interface further includes an entry associated with a second live streaming room corresponding to the first source.

Based on such a manner, the embodiments of the present disclosure may allow a live streaming room to apply a content of a further live streaming room, and present two video signals. Therefore, the embodiments of the disclosure may improve the flexibility of live stream, for example, is especially suitable for scenes such as event commentary.

Various example implementations of this scheme are described in detail below in conjunction with the accompanying drawings.

### Example Environment

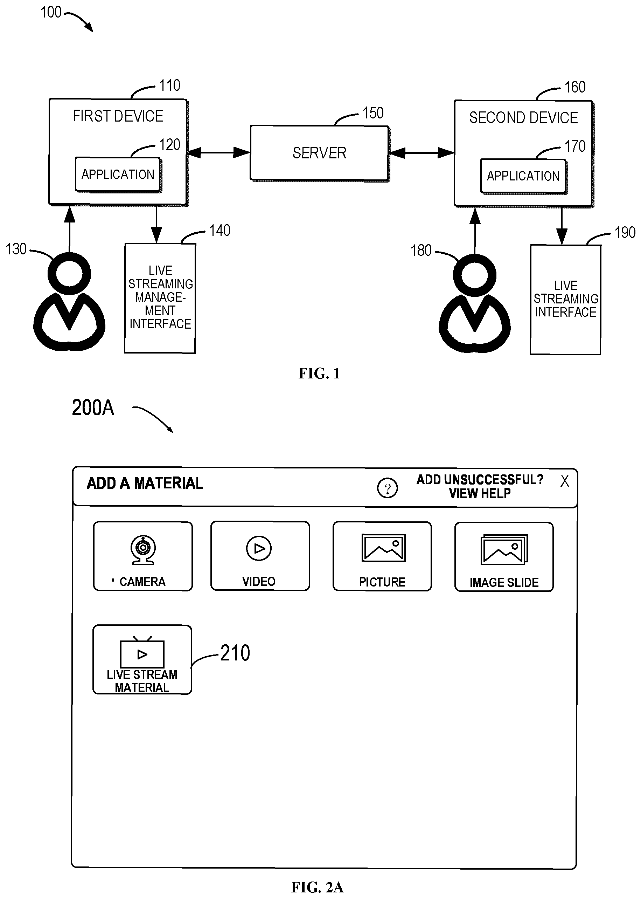

FIG. 1 illustrates a schematic diagram of an example environment 100 in which embodiments of the present disclosure may be implemented. In the example environment 100, a first device 110 and a second device 160 may be included.

For example, the first device 110 may be associated with a live streaming party 130 (also referred to as an anchor) and may be provided with an application 120. The live streaming party 130 may interact with the application 120 via the first device 110 and/or the attachment device of the first device 110. For example, the application 120 may be an application related to live streaming, for example, a live streaming application or a live streaming management application. The application 120 may provide, to the live streaming 130, one or more services related to the live streaming.

In the environment 100 of FIG. 1, upon opening the application 120, the first device 110 may present an interface 140 of the application 120, also referred to as a live streaming management interface 140. The live streaming party 130 may control a provision of a content in a corresponding live streaming room through the live streaming management interface 140.

In some embodiments, the first device 110 may further communicate with a server 150 to enable provision of services to the application 120.

Further, the second device 160 may, for example, be associated with a user 180 (also referred to as a viewer), which may be installed with an application 170. The user 180 may interact with the application 170 via the second device 160 and/or an attachment device of the second device 160. For example, the application 170 may be an application related to obtaining a live streaming, for example, a live streaming application or a video application. The application 170 may provide the user 180 with one or more services related to obtaining the live streaming. It should be understood that the application 120 and the application 170 may be the same or different applications.

In the environment 100 of FIG. 1, upon opening the application 170, the second device 160 may present an interface 180, also referred to as a live streaming interface 190 of the application 170. For example, the user 180 may obtain a live streaming content related to the live streaming party 130 through the live streaming interface 190.

The first device 110 and/or the second device 160 may be any type of mobile terminal, fixed terminal, or portable terminal, including a mobile phone, a desktop computer, a laptop computer, a notebook computer, a netbook computer, a tablet computer, a media computer, a multimedia tablet, a personal communication system (PCS) device, a personal navigation device, a personal digital assistant (PDA), an audio/video player, a digital camera/camcorder, a positioning device, a television receiver, a radio broadcast receiver, an electronic book device, a gaming device, or any combination of the foregoing, including accessories and peripherals of these devices, or any combination thereof. In some embodiments, the first device 110 and/or the second device 160 may also support any type of interface for a user (such as a 'wearable' circuit, etc. ). The server 150 may be various types of computing systems/servers capable of providing computing power, including, but not limited to, mainframes, edge computing nodes, computing devices in a cloud environment, and the like.

It should be understood that the structures and functions of the various elements in the environment 100 are described for example purposes only and do not imply any limitation to the scope of the present disclosure.

### Example Live Streaming Configuration

In some embodiments, the first device 110 may allow the live streaming party 130 to add live stream materials associated with a further live streaming room to improve the flexibility of the live streaming.

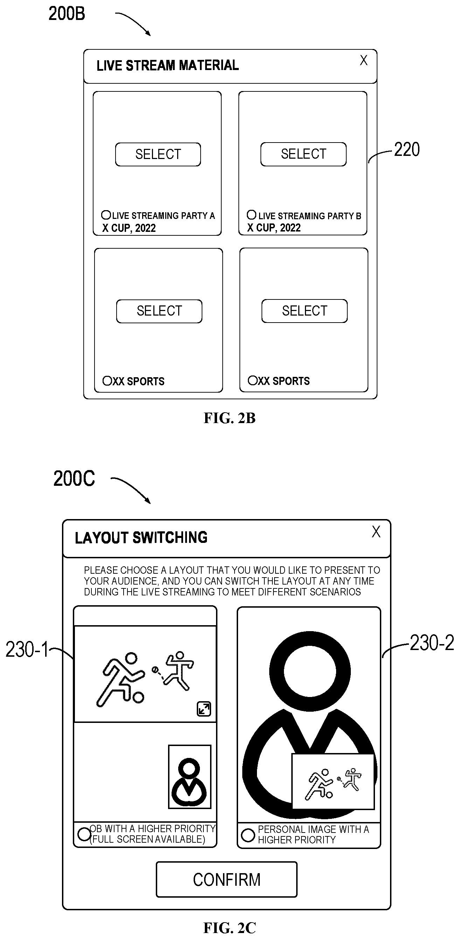

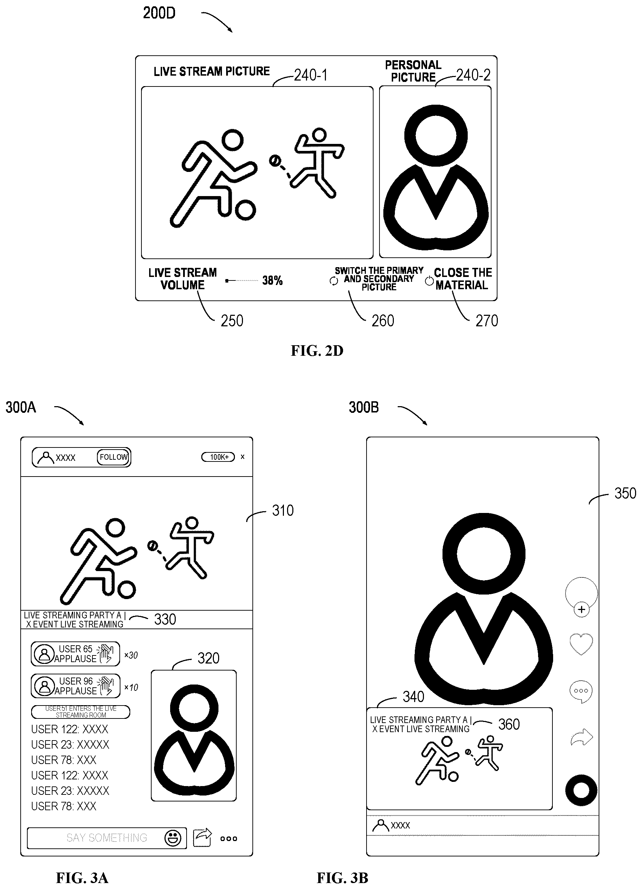

The related process of live streaming configuration of the live streaming party 130 is discussed below with reference to FIGS. 2A to 2D. FIG. 2A illustrates an example live streaming configuration interface 200A according to some embodiments of the present disclosure. The live streaming configuration interface 200 may be provided, for example, by the first device 110.

As shown in FIG. 2A, in a process of starting the live streaming configuration by the live streaming party 130, the live streaming management interface 200A for adding the live streaming material may be obtained. The live streaming management interface 200A may present a live streaming material adding entry corresponding to a plurality of different types of live streaming materials.

For example, the material that may be added by the live streaming party 130 may include: a video stream of a local camera, a local video, a local picture, a local image slide, and the like.

In some embodiments, the live streaming party 130 may also be allowed to add a live stream material associated with a further live streaming room. Correspondingly, as shown in FIG. 2A, the live streaming management interface 200A may present an adding entry 210 corresponding to the live stream material.

In some embodiments, in response to receiving a selection to the adding entry 210, the first device 110 may, for example, present an interface 200B. In the interface 200B, the first device 110 may present one or more live stream materials 220, also referred to as sources, that the live streaming party 130 may be allowed to add.

In some embodiments, the first device 110 presents the live stream material 220 in the interface 200B only when the live streaming party 130 is determined to have a reference permission to the corresponding live stream material 220. Such a reference permission may be, for example, configured by a manager of the live stream material 220; or may be created in response to an application of the live streaming party 130.

For example, the server 150 may, for example, manage information of a live streaming party having a reference permission to the live stream material 220. In some embodiments, a live stream material may be a live streaming content managed by the live streaming platform and may be used by default for a particular platform live streaming room (also referred to as an official live streaming room). For example, the live stream material 220 may correspond to a live stream signal of a particular event managed by a live streaming platform.

In some embodiments, such a live stream material may also correspond to a live stream of a personal live streaming party (also referred to as a personal anchor, or a non-official anchor) in a live streaming platform. The live streaming party 130 may have a reference permission to a corresponding live streaming recording material of a personal live streaming party, with a permission of the personal live streaming party.

In some embodiments, when the live streaming party 130 does not have a reference permission for any live stream material, for example, the adding entry 210 may be set to be unavailable, or not displayed in the interface 200A.

Further, after the live streaming party 130 adds the corresponding live stream material 220 with the interface 200B, the electronic device 110 may, for example, present an interface 200C to support the live streaming party 230 to configure a layout of a video content (also referred to as a first video content) corresponding to the selected live stream material 220 (also referred to as a first source) and a video content (also referred to as a second video content for ease of description) associated with the live streaming party 230.

Such second video content may correspond to, for example, a video stream (also referred to as a second source) of the live streaming party 130 captured by an image collection device (e.g., a camera) associated with the first device 110. Alternatively, when the camera is not turned on, the live streaming party 130 may also set a predetermined picture as a source of the video stream to serve as the second source.

In some embodiments, such a layout can, for example, indicate a style of the first video content or the second video content being presented in the live streaming interface. Such styles may include, for example, style 230-1 to indicate the first video content being presented with a higher priority; and style 230-2 may also be included to indicate the second video content being presented with a higher priority.

In some embodiments, the live streaming party 130 may also not perform a style configuration, for example. In this case, its style may be determined as a default style, for example. Such style configuration information is generated by the first device 110 and sent to a service 150 for management of the live streaming room, e.g., as part of the live streaming configuration information.

Further, during live streaming of the live streaming party 130, the first device 110 may further present an interface 200D to provide, for example, a picture 240-1 of the first video content corresponding to the live stream material 220 and a picture 240-2 of the second video content to the live streaming party 130 in real time.

In some embodiments, the second video content may be an illustration for the first video content. For example, the first video content may include a event live streaming content, and the second video content may be a live streaming of the live streaming party 130 with respect to the event live streaming content.

In addition, the interface 200D may further include one or more live streaming adjustment controls. For example, a control 250 may be configured to support the anchor adjusting a volume of the first video content and/or the second video content. A control 260 may be configured to switch a layout of the first video content and the second video content in the live streaming. A control 270 may be configured to close a referenced live stream material in the live streaming, that is, cease the first video content from being presented in the live streaming room.

Based on the manner discussed above, embodiments of the present disclosure may allow a live streaming to directly reference a live stream material associated with a further live streaming room in a live streaming process. In this way, the embodiments of the present disclosure may improve the flexibility of live streaming. In addition, by adding a live stream material, the video quality of the live video may also be significantly improved.

### Example Live Streaming Interface

In some embodiments, as discussed above, the second device 160 may support a user 170 viewing the live streaming interface 190 corresponding to the live streaming party 130.

Example live streaming interfaces are discussed below with reference to FIGS. 3A to 3C. FIG. 3A illustrates an example live streaming interface 300A according to some embodiments of the present disclosure. For example, the live streaming interface 300 may be provided by the second device 160.

After receiving an access request for a live streaming room (also referred to as a first live streaming room) corresponding to the live streaming party130, the first device 130 may, for example, present the live streaming interface 300A shown in FIG. 3A. It should be understood that such an access request may include any suitable access manner, including but not limited to: opening an entry of a live streaming room in the application 170, directly accessing the live streaming room through a link address, and the like.

As shown in FIG. 3A, the live streaming interface 300A may be configured to provide a first video content 310 and a second video content 320. As discussed above with respect to the live streaming configuration process, such first video content 310 may correspond, for example, to a live stream material (i.e., a first source) added by the live streaming party 130. The second video content 320 may correspond to a second source associated with the live streaming party 130, e.g., a video stream of the live streaming party 130 captured by a camera.

In some embodiments, the interface 300A may further include, for example, an entry 330 associated with a live streaming room (also referred to as a second live streaming room) corresponding to the first source. For example, a live stream material added by the live streaming party 130 may correspond to, for example, a live streaming room of 'live streaming party A'. In some examples, such 'live streaming party A' may be, for example, an official live streaming party of a live streaming platform. Alternatively, such 'live streaming party A' may be, for example, a non-official live streaming party of a live streaming platform, for example, a personal live streaming party.

**In** some embodiments, in a generation interface 300A, the second device 160 may receive a live stream related to the first live streaming room from the server 150 and parse the first video content 310 and the second video content 320 from the live stream.

Further, the second device 160 may further obtain style configuration information associated with a first live streaming interface (for example, the live streaming interface 300A) of the first live streaming room from the service 150, and correspondingly draw the live streaming interface 300A based on the style configuration information.

As discussed above, such layout information may be configured to indicate a style of the first video content, or the second video content being presented in the first live streaming interface. For example, the style may be a first video content, or a second video content being presented with a higher priority.

Taking the interface 300A as an example, such layout information may, for example, indicate that the first video content 310 is presented with a higher priority. For example, the first video content 310 may have a larger display size than the second video content 320 and may be located at a relatively more significant location. In some embodiments, the display position of the second video content 320 is, for example, unchangeable by the user 180.

As a further example, if the style configuration information indicates the second video content being presented with a higher priority, the second device 160 may accordingly present the live streaming interface 300B. As shown in FIG. 3B, in the live streaming interface 300B, a second video content 350 may be presented with a higher priority, for example, in full screen. Accordingly, a first video content 340 may be presented in a floating window below the left of the interface 300B and at a smaller size.

Additionally, the live streaming interface 300B may also include an entry 360 associated with a live streaming room (also referred to as a second live streaming room) corresponding to the first source.

**In** some embodiments, in addition to considering the live streaming style configuration information, the second device 160 presents the live streaming interface may further based on orientation information of a display device of the second device 300A.

Taking FIG. 3A as an example, when the live streaming configuration information indicates a display style in which the first video content is displayed with a higher priority and the orientation of the second device 160 is a vertical orientation, the second device 160 may be presented as shown in FIG. 3A.

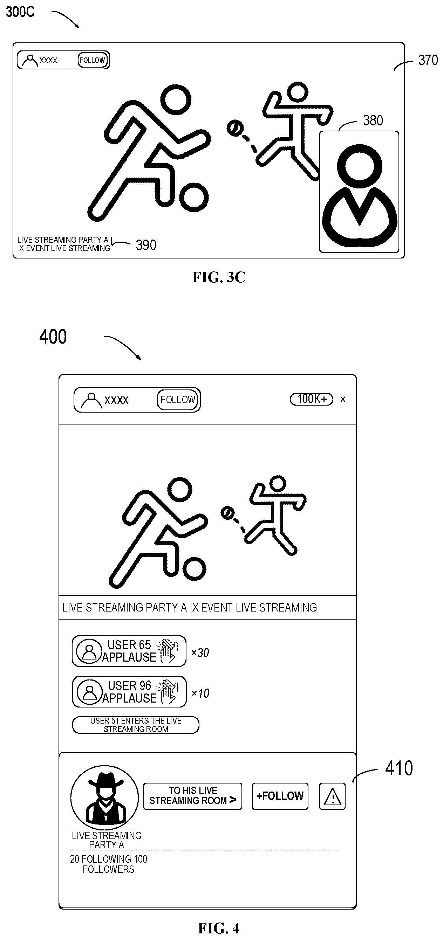

**In** some embodiments, if the orientation of the second device 160 is rotated to a horizontal orientation, the second device 160 may be presented, for example, in the live streaming interface 300C as shown in FIG. 3C. As shown in FIG. 3C, a first video content 370, for example, may be presented with a higher priority, for example, in full screen. Additionally, a second video content 380, for example, may then be presented as a floating window in the lower right of the interface 300C, and at a smaller size.

Additionally, the live streaming interface 300B may also include an entry 390 associated with a live streaming room (also referred to as a second live streaming room) corresponding to the first source.

**In** some embodiments, after receiving a selection of an entry (for example, the entry 330, the entry 360, and/or the entry 390 introduced above) associated with the second live streaming room in the live streaming interface, the second device 160 may, for example, present a live streaming interface (also referred to as a second live streaming interface) with the second live streaming room. The second live streaming interface may be configured to provide a third video content corresponding to the first source. Such third video content may be, for example, the same as the first video content, e.g., a video content corresponding to the same video stream. Alternatively, such third video content may also present, for example, a third video content different from the first video content style based on the live streaming setting of the second live streaming room, for example, the third video content may have a higher or lower resolution. For example, taking FIG. 3A as an example, the second device 160 may jump to the second live streaming room corresponding to the 'live streaming party A'.

Alternatively, after receiving the selection of the entry (e.g., the entry 330, the entry 360, and/or the entry 390 as introduced above) associated with the second live streaming room in the live streaming interface, the second device 160 may also present description information associated with the second live streaming room, for example.

For example, FIG. 4 shows an example live streaming interface 400 according to some embodiments of the present disclosure. Upon receiving a selection of the entry 330 in the interface 300A, for example, the second device 160 may present description information 410 with the second live streaming room.

Such description information 410 may include, for example, information such as an identifier of a live streaming room, a current number of viewers of the live streaming room, a level of the live streaming room, a popularity of the live streaming room, and the like. Alternatively or in addition, such description information 410 may also include, for example, a live streaming party description about the second live streaming party (for example, 'live streaming party A'), for example, the identifier of the live streaming party, the number of people followed by the live streaming party, and a historical live streaming condition of the live streaming party.

In addition, the interface 400 may also include, for example, an access entry for accessing the second live streaming room, and a following entry for following the second live streaming party. Therefore, the user may jump an original live streaming room of the first video content more conveniently, thereby improving the efficiency of obtaining the live streaming content by the user.

### Merge-stream transmission and parsing of live stream

In some embodiments, in order to improve a quality of a live video, the server 150 may obtain a first live stream originating from a live stream material (i.e., a first source), and obtain a second live stream originating from a second source (e.g., a camera of the live streaming party), and merge the first live stream and the second live stream to generate a live stream for transmitting to the second device 160.

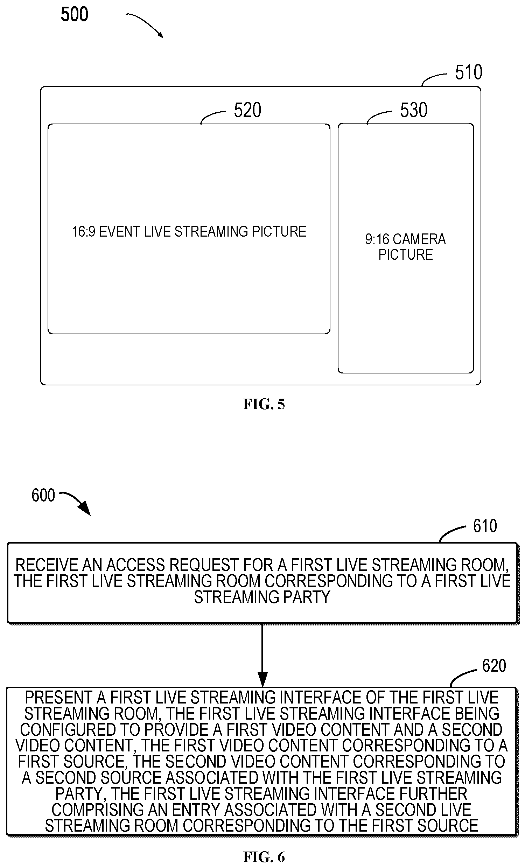

FIG. 5 illustrates a schematic diagram 500 of merging video streams according to some embodiments of the present disclosure. As shown in FIG. 5, the first live stream may correspond to a first picture 520 of 16: 9, and the second live stream may correspond to a second picture 530 of 9: 16. The server 150 may generate a target image 510 based on the first image 520 and the second image 530, thereby completing the merging of the first live stream and the second live stream.

Further, after obtaining the live stream, the second device 160 may parse the target picture 510 to separately extract the first picture 520 corresponding to the first video content and the second picture 530 corresponding to the second video content.

It should be understood that the specific manner of image merging in FIG. 5 is merely for an example, and appropriate frame merging and transmission may be performed according to specific situations of picture sizes.

On the basis of the mode, the embodiment of the disclosure may effectively improve the time synchronization between video contents from different sources, avoid the problem that the audio and picture are not synchronized, and improve the quality of the video content.

### Example Process

FIG. 6 illustrates a flowchart of an example process 600 for live streaming according to some embodiments of the present disclosure. The process 600 may be implemented by the second device 160 discussed above.

As shown in FIG. 6, at block 610, the second device 160 receives an access request for a first live streaming room, the first live streaming room corresponding to a first live streaming party.

At block 620, the second device 160 presents a first live streaming interface of the first live streaming room, the first live streaming interface being configured to provide a first video content and a second video content, the first video content corresponding to a first source, the second video content corresponding to a second source associated with the first live streaming party, the first live streaming interface further including an entry associated with a second live streaming room corresponding to the first source.

In some embodiments, presenting the first live streaming interface of the first live streaming room includes: receiving a live stream associated with the first live streaming room; parsing the first video content and the second video content from the live stream; and presenting the first live streaming interface based on layout information associated with the first live streaming interface, such that the first video content and the second video content are displayed in the first live streaming interface based on the layout information.

In some embodiments, the layout information indicate that the first video content or the second video content is presented in the first live streaming interface with a higher priority.

In some embodiments, the layout information is based on: live streaming configuration information associated with the first live streaming room; and/or orientation information of a display device for presenting the first live streaming interface.

In some embodiments, the live streaming configuration information include predetermined configuration information, or the live streaming configuration information is generated based on a live streaming setting of the first live streaming party.

In some embodiments, the live stream is generated based on a merging of a first live stream originating from the first source and a second live stream originating from the second source.

**In** some embodiments, the process 600 further includes: in response to a selection of the entry: presenting a second live streaming interface of the second live streaming room, the second live streaming interface being configured to provide a third video content corresponding to the first source; or presenting description information associated with the second live streaming room.

**In** some embodiments, the description information includes a live streaming party description of a second live streaming party corresponding to the second live streaming room.

**In** some embodiments, the first source is managed by a live streaming platform, the first live streaming party being a target user of the live streaming platform, the target user having a reference permission to the first source.

**In** some embodiments, in response to a predetermined live streaming party having a reference permission to the first source, a live streaming management interface of the predetermined live streaming party being configured to present an entry for adding the first source as a live stream material.

### Example Apparatus and Device

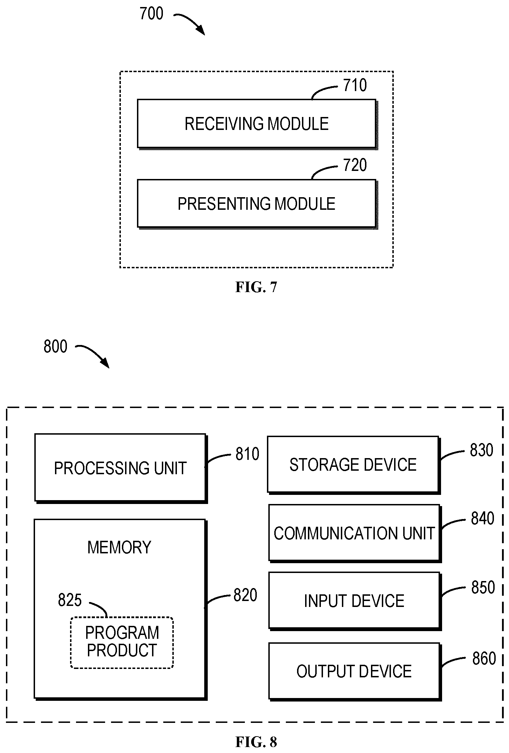

Embodiments of the present disclosure further provide a corresponding apparatus for implementing the above method or process. FIG. 7 is a schematic structural block diagram of an apparatus 700 for live streaming according to some embodiments of the present disclosure.

As shown in FIG. 7, the apparatus 700 includes a receiving module 710 configured to receive an access request for a first live streaming room, the first live streaming room corresponding to a first live streaming party.

**In** addition, the apparatus 700 further includes a presenting module 720 configured to present a first live streaming interface of the first live streaming room, the first live streaming interface being configured to provide a first video content and a second video content, the first video content corresponding to a first source, the second video content corresponding to a second source associated with the first live streaming party, the first live streaming interface further including an entry associated with a second live streaming room corresponding to the first source.

**In** some embodiments, the presenting module 720 is further configured to: receive a live stream associated with the first live streaming room; parse the first video content and the second video content from the live stream; and present the first live streaming interface based on layout information associated with the first live streaming interface, such that the first video content and the second video content are displayed in the first live streaming interface based on the layout information

**In** some embodiments, the layout information indicate that the first video content or the second video content is presented in the first live streaming interface with a higher priority.

**In** some embodiments, the layout information is based on: live streaming configuration information associated with the first live streaming room; and/or orientation information of a display device for presenting the first live streaming interface.

**In** some embodiments, the live streaming configuration information include predetermined configuration information, or the live streaming configuration information is generated based on a live streaming setting of the first live streaming party.

**In** some embodiments, the live stream is generated based on a merging of a first live stream originating from the first source and a second live stream originating from the second source.

In some embodiments, the presenting module 720 is further configured to: in response to a selection of the entry: present a second live streaming interface of the second live streaming room, the second live streaming interface being configured to provide a third video content corresponding to the first source; or present description information associated with the second live streaming room.

In some embodiments, the description information includes a live streaming party description of a second live streaming party corresponding to the second live streaming room.

In some embodiments, the first source is managed by a live streaming platform, the first live streaming party being a target user of the live streaming platform, the target user having a reference permission to the first source.

In some embodiments, in response to a predetermined live streaming party having a reference permission to the first source, a live streaming management interface of the predetermined live streaming party being configured to present an entry for adding the first source as a live stream material.

The units included in the apparatus 700 may be implemented in various manners, including software, hardware, firmware, or any combination thereof. In some embodiments, one or more units may be implemented using software and/or firmware, such as machine-executable instructions stored on a storage medium. In addition to or as an alternative to machine-executable instructions, some or all of the elements in the apparatus 700 may be implemented, at least in part, by one or more hardware logic components. By way of example and not limitation, example types of hardware logic components that may be used include field programmable gate arrays (FPGAs), application specific integrated circuits (ASICs), application specific standards (ASSPs), system-on-a-chip (SOCs), complex programmable logic devices (CPLDs), and the like.

FIG. 8 illustrates a block diagram of a computing device/server 800 in which one or more embodiments of the present disclosure may be implemented. It should be understood that the computing device/server 800 illustrated in FIG. 8 is merely for example and should not constitute any limitation on the function and scope of the embodiments described herein.

As shown in FIG. 8, the computing device/server 800 is in a form of a general-purpose electronic device. Components of the computing device/server 800 may include, but are not limited to, one or more processors or processing units 810, memory 820, storage device 830, one or more communication units 840, one or more input devices 850, and one or more output devices 860. The processing units 810 may be actual or virtual processors and are capable of performing various processes based on programs stored in the memory 820. In a multiprocessor system, a plurality of processing units perform computer-executable instructions in parallel to increase the parallel processing power of the computing device/server 800.

The computing device/server 800 typically includes a plurality of computer storage media. Such media may be any obtainable media accessible to the computing device/server 800, including, but not limited to, volatile and non-volatile media, removable and non-removable media. The memory 820 may be volatile memory (e.g., registers, cache, random access memory (RAM)), non-volatile memory (e.g., read-only memory (ROM), electrically erasable programmable read-only memory (EEPROM), flash memory), or some combination thereof. The storage device 830 may be a removable or non-removable medium and may include a machine-readable medium, such as a flash drive, a disk, or any other medium that may be capable of being configured to store information and/or data (e.g., training data for training) and may be accessible within the computing device/server 800.

The computing device/server 800 may further include additional removable/non-removable, volatile/non-volatile storage media. Although not shown in FIG. 8, a disk drive for reading from or writing to a removable, non-volatile disk (e.g., a 'floppy disk') and an optical disk drive for reading from or writing to a removable, non-volatile optical disk may be provided. In these embodiments, each drive may be connected to a bus (not shown) by one or more data media interfaces. The memory 820 may include a computer program product 825 having one or more program modules that are configured to perform various methods or actions of various embodiments of the present disclosure.

The communication unit 840 implements communication with other electronic devices via a communication medium. Additionally, the functions of the components of the computing device/server 800 may be implemented as a single computing cluster or a plurality of computing machines that are capable of communicating over a communication connection. Thus, the computing device/server 800 may use logical connections to one or more other servers, networked personal computers (PCs), or another network node to operate in a networked environment.

The input device 850 may be one or more input devices, such as a mouse, a keyboard, a tracking ball, and the like. The output device 860 may be one or more output devices, such as a monitor, a speaker, a printer, and the like. The computing device/server 800 may also communicate, as desired, via the communication unit 840, with one or more external devices (not shown), external devices such as storage devices, display devices, etc., with one or more devices that enable a user to interact with the computing device/server 800, or with any device that enables the computing device/server 800 to communicate with one or more other electronic devices (e.g., a network card, modem, etc.) to communicate. Such communication may be performed via an input/output (I/O) interface (not shown).

According to example implementations of the present disclosure, a computer-readable storage medium having one or more computer instructions stored thereon is provided, the computer instructions being performed by a processor to implement the methods described above.

Aspects of the present disclosure are described herein with reference to flowcharts and/or block diagrams of methods, apparatuses, (systems), and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the flowchart and/or block diagram (s).

The computer-readable program instructions may further be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the flowchart and/or block diagram block or blocks.

The flowchart and block diagrams in the figures show architecture, function, and operation of possible implementations of systems, methods, and computer program products according to various implementations of the present disclosure. In this regard, each block in the flowchart or block diagram may represent a module, program segment, or part of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the function involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are exemplary, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming, comprising:
receiving an access request for a first live streaming room, the first live streaming room corresponding to a first live streaming party; and
presenting a first live streaming interface of the first live streaming room, the first live streaming interface being configured to provide a first video content and a second video content, the first video content corresponding to a first source, the second video content corresponding to a second source associated with the first live streaming party, the first live streaming interface further comprising an entry associated with a second live streaming room corresponding to the first source.

2. The method of claim 1, wherein presenting the first live streaming interface of the first live streaming room comprises:
receiving a live stream associated with the first live streaming room;
parsing the first video content and the second video content from the live stream; and
presenting the first live streaming interface based on layout information associated with the first live streaming interface, such that the first video content and the second video content are displayed in the first live streaming interface based on the layout information.

3. The method of claim 2, wherein the layout information indicate that the first video content or the second video content is presented in the first live streaming interface with a higher priority.

4. The method of claim 2, wherein the layout information is based on:
live streaming configuration information associated with the first live streaming room; and/or
orientation information of a display device for presenting the first live streaming interface.

5. The method of claim 4, wherein the live streaming configuration information comprise predetermined configuration information, or
the live streaming configuration information is generated based on a live streaming setting of the first live streaming party.

6. The method of claim 2, wherein the live stream is generated based on a merging of a first live stream originating from the first source and a second live stream originating from the second source.

7. The method of claim 1, further comprising:
in response to a selection of the entry:
presenting a second live streaming interface of the second live streaming room, the second live streaming interface being configured to provide a third video content corresponding to the first source; or
presenting description information associated with the second live streaming room.

8. The method of claim 7, wherein the description information comprises a live streaming party description of a second live streaming party corresponding to the second live streaming room.

9. The method of claim 1, wherein the first source is managed by a live streaming platform, the first live streaming party being a target user of the live streaming platform, the target user having a reference permission to the first source.

10. The method of claim 1, wherein, in response to a predetermined live streaming party having a reference permission to the first source, a live streaming management interface of the predetermined live streaming party being configured to present an entry for adding the first source as a live stream material.

11. An apparatus for live streaming, comprising:
a receiving module configured to receive an access request for a first live streaming room, the first live streaming room corresponding to a first live streaming party; and
a presenting module configured to present a first live streaming interface of the first live streaming room, the first live streaming interface being configured to provide a first video content and a second video content, the first video content corresponding to a first source, the second video content corresponding to a second source associated with the first live streaming party, the first live streaming interface further comprising an entry associated with a second live streaming room corresponding to the first source.

12. An electronic device comprising:
at least one processing unit; and
at least one memory coupled to the at least one processing unit and storing instructions for execution by the at least one processing unit, the instructions, when executed by the at least one processing unit, causing the apparatus to perform the method of any of claim 1 to 10.

13. A computer-readable storage medium having a computer program stored thereon, the computer program, when executed by a processor, implementing the method of any of claim 1 to 10.
